(19) Europäisches Patentamt
European Patent Office
Office européen des brevets

(11) Publication number: **0 000 921**
**B1**

(12) **EUROPEAN PATENT SPECIFICATION**

(45) Date of publication of patent specification: **02.12.81**

(21) Application number: **78100676.2**

(22) Date of filing: **16.08.78**

(51) Int. Cl.³: **D 21 D 3/00,** D 21 H 3/38, C 08 F 257/02, C 08 F 279/02, C 08 F 8/00 //(C08F257/02, 212/14, 279/02, 212/14)

(54) **A method for preparing a high strength composite and fibrous web comprising a dried composite.**

(30) Priority: **17.08.77 US 825323**
**17.08.77 US 825320**

(43) Date of publication of application:
**07.03.79 Bulletin 79/5**

(45) Publication of the grant of the European patent:
**02.12.81 Bulletin 81/48**

(84) Designated Contracting States:
**DE FR GB NL SE**

(56) References cited:
**FR - A - 2 308 660**
**US - A - 3 146 157**

(73) Proprietor: **THE DOW CHEMICAL COMPANY**
**2030 Abbott Road Post Office Box 1967**
**Midland, Michigan 48640 (US)**

(72) Inventor: **Pickelman, Dale Martin**
**319 Price**
**Auburn Bay Michigan (US)**
Inventor: **Foster, William Albert**
**501 Chapel Lane**
**Midland Michigan (US)**
Inventor: **Wessling, Ritchie Antone**
**5007 Nurmi**
**Midland Michigan (US)**

(74) Representative: **Casalonga, Alain et al,**
**Bureau D.A. Casalonga Lilienstrasse 77**
**D-8000 München 80 (DE)**

**EP 0 000 921 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

A method for preparing a high strength composite and fibrous web comprising a dried composite.

This invention is concerned with binder systems for use in the manufacture of high strength composites and the composites produced thereby, especially paper, paperboard, hardboard and insulation board.

The use of a latex in the manufacture of paper by wet-end addition, or as a beater additive, is well known. Commonly, the latex has been an anionic latex but a water-soluble cationic deposition aid has been used therewith. Because of the slightly anionic nature of pulp, it has been suggested that a low-charge density cationic latex should be used in order to get good deposition on the fibers without the use of a deposition aid. Combination of anionic and cationic wet-end additives in which both species are water soluble are known. However, the combination as wet-end additives of a cationic latex with a water soluble anionic polymer, particularly latexes having particles with a high density of pH independent bound charge at or near the particle surface has not been disclosed or suggested in the prior art.

It is known from US patent 3.146.157 to prepare webs of cellulosic fibers by using a water-soluble polymer mixture of polysulfonium resin and polycarboxylate resin.

This invention provides a method for preparing high strength composites by mixing an aqueous slurry of negatively charged, water-insoluble natural or synthetic fibers with a mixture of cationic and anionic polymers, removing water from the aqueous suspension to form a wet mat; and drying the mat by heating; characterized in that said mixture of polymers is a cationic latex containing a cationic water-insoluble copolymer and a co-additive, said copolymer being present as particles having pH independent bound charges at or near the particle surface in an amount from 0,07 to 0,6 milliequivalent per gram of copolymer, the copolymer particles of the latex being deformable at the temperature of the process and the co-additive is a water-soluble anionic polymer having a degree of polymerization above 3000, having an available charge of from 0,3 to 8 milliequivalents per gram of polymer, having an acyclic carbon-carbon chain backbone and having the capability of retaining its solubility in the presence of polyvalent metal ions at a pH from 4 to 7 to form an aqueous suspension of components.

Cationic structure particle latexes are described in French patent 2.308.660 and have been used as coating agent for hydrophobic carriers.

The latex is added in an amount greater than that required to cause charge reversal on the fiber but less than the amount which would exceed the capacity of the fiber to hold a wet mat together during processing. That amount is usually from 0.5 to 2000 percent, preferably from 10 to 100 percent, solids basis calculated on the dry weight of the fiber.

The cationic latex particles preferably have a charge density of from 0.1 to 0.6 milliequivalent, and most preferably from 0.15 to 0.5 milliequivalent, per gram of copolymer. Latexes with bound charge densities less than 0.1 meg/g tend to be insufficiently stable for some applications.

The amount of co-additive is an amount greater than that required to cause essentially complete retention of the latex on the fiber but less than the amount which would be effective to cause substantial redispersion of components of the aqueous suspension. The optimum amount provides good strength with very little redispersion. That amount is usually from 0.05 to 160 percent by weight based on the dry weight of the fiber.

The fiber is any kind of negatively charged, water insoluble, natural or synthetic fiber or blend of fibers which can be dispersed in aqueous slurry and includes crude, low quality "screenings," i.e., coarse by-product pulp from unbleached chemical pulp. either long or short fibers, or mixtures thereof are useful. Suitable also are glass fibers, reclaimed waste papers, cellulose from cotton and linen rags, straws and similar materials. Particularly useful fibers are the cellulosic and lignocellulosic fibers commonly known as wood pulp of the various kinds such as mechanical pulp, steam-heated mechanical pulp, chemimechanical pulp, semi-chemical pulp and chemical pulp. Specific examples are groundwood pulp, unbleached sulfite pulp, bleached sulfite pulp, unbleached sulfate pulp and bleached sulfate pulp. When employing these paper-making pulps latex in an amount of 5—2000 percent solids basis, calculated on the dry fiber weight, and co-additive in an amount of 0.15 to 160 weight percent based on dry fiber weight, one obtains fibrous webs having good formation.

The invention also provides a fibrous web comprising a dried composite containing (a) a paper-making grade of fiber having an anionic charge, (b) from 5 to 2000 percent, solids basis calculated on the weight of the fiber, of a structured-paticle latex having a non-ionic copolymer core; the non-ionic core being encapsulated by a thin layer of a water-insoluble organic copolymer having bound charges of pH independent cationic groups; the latex having from 0.15 to 0.6 milliequivalent of bound charge per gram of polymer in the latex and (c) from 0.15 to 160 percent, based on the weight of the fiber, of a co-additive which is a water-soluble anionic polymer of an acrylamide having a degree of polymerization of from 3,000 to 10,000 and having an available charge of from 0.3 to 8 milliequivalents per gram of co-additive wherein the co-additive retains its water solubility in the presence of metal ions at a pH from 4 to 7; all percentages being by weight.

For operability in the process, the latex component is rather insensitive to the copolymer composition thereof provided that the glass transition temperature (Tg) of the copolymer is less than

the temperature which will be used in the processing steps. Preferably the Tg will be room temperature or lower, even as low as −80°C, although polymers having Tg values up to about 100°C may be used. However, when the latex loading exceeds about 100 percent, based on the fiber, the wet mats are easier to handle when a hard latex copolymer is used, e.g., a copolymer having a Tg value greater than 0°C. Nevertheless, the copolymer in the latex must be deformable at the temperature to be used in the process.

The latexes are represented by but not restricted to structured particle latexes having a non-ionic organic polymer core. The non-ionic organic polymer is for example a copolymer of a monovinylidene aromatic monomer, an aliphatic conjugated diene and comprising optionally other non-ionic monomers. The thin polymer layer is made of a water-insoluble copolymer encapsulated by a thin layer of a polymer having bound charges as pH independent cationic groups at or near the particle surface.

One method of obtaining such latexes is by copolymerizing under emulsion polymerization conditions an ethylenically unsaturated, activated-halogen monomer onto the particle surface of a non-ionic, organic polymer which is slightly cationic through the presence of adsorbed cationic surfactant. The resulting latex is reacted with a non-ionic nucleophile to form a latex suitable for use in the practice of this invention.

Ordinarily, the particle size will range from 500 to 5000 Angstroms, preferably from 800 to 3000 Angstroms.

By "bound" as applied to groups or charges is meant that they are not desorbable under the conditions of processing. A convenient test is by dialysis against deionized water.

By the term "pH independent groups" as applied to ionic groups is meant that the groups are predominantly in ionized form over a wide range in pH, e.g., 2—12. Representative of such groups are sulfonium, sulfoxonium, isothiouronium, pyridinium and quaternary ammonium groups.

By "available charge" is mean the amount of charge an ionizable group would provide to a polymer when completely ionized.

By the term "non-ionic" as applied to the monomers in this specification is meant that the monomers are not ionic per se nor do not become ionic by a simple change in pH. For illustration, while a monomer containing an amine group is non-ionic at high pH, the addition of a water-soluble acid reduces the pH and forms a water-soluble salt; hence, such a monomer is not included. The non-ionic nucleophiles, however, are not similarly restricted, i.e., "non-ionic" as used with nucleophiles applies to such compounds which are non-ionic under conditions of use and tertiary amines, for example, are included.

The co-additive utilized in this invention preferably has a degree of polymerization above 5000, and an available charge of from 0.7 to 4.5 milliequivalents per gram of polymer. Such water-soluble polymers may be natural or synthetic. The upper limit of the degree of polymerization is not critical provided that the co-additive has the requisite solubility. In some cases, such as a partially cross-linked polymer, the DP value is indeterminate. Representative examples of the co-additive are polymers such as water-soluble high molecular weight acrylamide polymers having pendant anionic groups represented by carboxyl, sulfate, sulfonate and the like, sodium polystyrene sulfonate, partially hydrolyzed copolymers of vinyl acetate and acrylic acid, sulfated polyvinyl alcohols, polyvinyl acetate polymers having pendant anionic groups represented by carboxyl, sulfate and sulfonate and copolymers of hydroxyethyl acrylate and sulfoethyl methacrylate. Various known methods can be used to obtain these anionic acrylamide polymers. For example, polyacrylamide can be hydrolyzed to various levels. Other methods include direct copolymerization of substituted acrylamide monomers such as 2-acrylamido-2-methylpropane sulfonic acid with other hydrophilic monomers such as the $\alpha,\beta$-ethylenically unsaturated carboxylic acids represented by acrylic acid, methacrylic acid, fumaric acid, maleic acid and itaconic acid.

The preferred polymer co-additive has a molecular weight high enough to flocculate the fines but low enough to avoid poor formation. If the degree of polymerization is less than 3000, flocculation is inadequate and drainage and retention are poor. If the degree of polymerization is over 10,000, the flocculation is excellent but paper formation is unsatisfactory for some grades of paper.

The optimum charge on the co-additive depends somewhat on the hardness of the water used, i.e., the concentration of multivalent cations such as $Ca^{++}$ in the water. Generally polymers of low available charge content, such as less than about one milliequivalent of available charge per gram (meg/g) of polymer, work best in hard water. However, in soft water, better results are obtained when the anionic co-additive has greater than one milliequivalent of available charge per gram of polymer.

The non-ionic copolymer core of the latexes operable in the practice of this invention for making papers having good formation preferably contains from 20 to 50 percent of an aliphatic, conjugated diene (preferably 1,3-butadiene), from 20 to 80 percent of a monovinylidene aromatic compound (preferably styrene), from 0 to 5 percent of polar, non-ionic ethylenically unsaturated monomers and from 0 to 25 percent of other ethylenically unsaturated non-ionic monomers which when in the form of homopolymers are water-insoluble.

The monovinylidene aromatic compounds are represented by styrene, substituted styrenes (e.g., styrene having halogen, alkoxy, cyano or alkyl substituents), vinyl naphthalene and the like. Specific examples are styrene, $\alpha$-methylstyrene, ar-methylstyrene, ar-ethylstyrene, $\alpha$-ar-dimethylstyrene, ar,ar-

dimethylstyrene, ar-t-butylstyrene, methoxystyrene, cyanostyrene, acetylstyrene, monochlorostyrene, dichlorostyrenes, other halostyrenes and vinylnaphthalene.

By the term "monovinylidene aromatic" monomer or compound is meant that to an aromatic ring in each molecule of the monomer or compound is attached one radical of the formula,

$$CH_2{=}\overset{R}{\overset{|}{C}}-$$

wherein R is hydrogen or a lower alkyl such as an alkyl having from 1 to 4 carbon atoms.

The aliphatic conjugated dienes operable in the practice of this invention include butadiene and substituted butadiene and other acyclic-compounds having at least two sites of ethylenic unsaturation separated from each other by a single carbon-to-carbon bond. Specific examples are isoprene, chloroprene, 2,3-dimethylbutadiene-1,3, methylpentadiene, and especially 1,3-butadiene (often abbreviated butadiene).

The polar, non-ionic, ethylenically unsaturated monomers are represented by the acrylamides such as acrylamide and methacrylamide; the hydroxyl-containing esters of $\alpha,\beta$-ethylenically unsaturated, aliphatic monocarboxylic acids such as $\beta$-hydroxyethyl acrylate, $\beta$-hydroxyethyl methacrylate, $\beta$-hydroxypropyl methacrylate, 4-hydroxybutyl acrylate and 5-hydroxypentyl methacrylate.

The other ethylenically unsaturated non-ionic monomers which when in the form of homopolymers are water-insoluble are represented by the lower alkyl acrylate and methacrylate esters such as methyl-acrylate, ethyl acrylate, methyl methacrylate, ethyl methacrylate, isopropyl methacrylate; and the unsaturated nitriles such as acrylonitrile and methacrylonitrile.

In one method for the preparation of latexes usable in the practice of this invention, a known starting latex of a non-ionic polymer of a monovinylidene aromatic compound and an aliphatic conjugated diene is encapsulated with a thin layer of a copolymer of an ethylenically unsaturated activated-halogen monomer either by adding the activated-halogen monomer or a mixture of such monomers to the reaction mixture of the starting latex before all of the monomers are converted to polymer or by adding the activated-halogen monomer together with one or more hydrophobic monomers to a starting latex containing essentially no residual monomers, and initiating and continuing polymerization of the thus-added monomers to substantially complete conversion. The resulting latex, having a particle size (diameter) of from 800 Angstroms to 3,000 Angstroms consists of the starting latex particle now encapsulated with a bound layer having a thickness of from a monomolecular layer of the copolymer to about 100 Angstroms. The latex according to the foregoing description can then be reacted with a low molecular weight, non-ionic, water-stable, nucleophilic compound which can diffuse through an aqueous phase, to form particles of polymer having pH independent cationic groups, i.e., onium ions, chemically attached at or near the particle surface.

Representative specific nucleophilic compounds are pyridine, quinoline, isoquinoline, tetramethyl thiourea, tetraethyl thiourea, hydroxyethylmethyl sulfide, hydroxyethylethyl sulfide, dimethyl sulfide, diethyl sulfide, di-n-propyl sulfide, methyl-n-propyl sulfide, methylbutyl sulfide, dibutyl sulfide, trimethylene sulfide, thiacyclohexane, tetrahydrothiophene, N-methylpiperidine, N-ethylpyrrolidine, N-hydroxyethylpyrrolidine, trimethylphosphine, triethylphosphine, tri-n-butylphosphine, trimethylamine, triethylamine, tri-n-propylamine, tri-isobutylamine, hydroxyethyldimethylamine, butyldimethylamine, tri-hydroxyethylamine, triphenylphosphorus, and N,N,N-dimethylphenethylamine.

In carrying out the reaction between the nucleophilic compound and the particles of latex having activated halogens chemically bound to the surface thereof, the latex is stirred gently while the nucleophilic compound is added thereto, as the compound per se or in the form of a solution. Gentle stirring may continue throughout the ensuing reaction, or optionally after dispersion of the compound in the latex, the stirring may be discontinued. The reaction is conveniently carried out at ambient temperature although temperatures from 0°C to 80°C can be used. The reaction occurs spontaneously at a rate which depends upon the reactivity of the activated halogen and of the nucleophile. It is preferred to carry out the reaction until a predominant porportion of the colloidal stability of the product is provided by the resulting chemically bound cationic groups. Usually a catalyst is not required although with the less reactive materials, a small amount of iodide ion may be used to facilitate the reaction. When a desired degree of reaction is reached, any excess nucleophile commonly is removed by standard methods, e.g., dialysis, vacuum stripping and steam distillation.

Other pH independent cationic groups can be substituted for cationic groups which are chemically bound to the latex particles according to the foregoing description by carrying out a further reaction with such cationic groups. For example, a cationic structured-particle latex having sulfonium groups chemically bound to the structured-particles at or near the particle surface can be reacted with hydrogen peroxide at a temperature of from 20° to 80°C, preferably at ambient temperature, for a sufficient time to oxidize part or all of the sulfonium groups to sulfoxonium groups. Such treatment also reduces the odor of the latex. For best results in such oxidation reaction, the hydrogen peroxide is used in excess, e.g., from 2 to 10 moles of hydrogen peroxide for each mole of sulfonium groups.

The latexes can contain usual additives such as antifoamers, coalescing solvents, pigments, and pH adjusting agents. It is preferred that the latexes are soap-free but quantities up to about 0.1 milliequivalent per gram can be tolerated.

The process to prepare the product of this invention preferably is carried out as follows: A dilute aqueous suspension of the fiber is formed in the normal manner for example in a concentration of from 0.5 to 6 percent. The latex is added at any convenient concentration, often in the concentration as supplied and the resulting mixture is stirred, usually for at least two minutes depending on the equipment available. The aqueous suspension usually is then diluted further, often with white water from the process. The co-additive is added as an aqueous solution at a concentration usually less than 1 percent solids and the mixture is stirred generally for near the minimum time to obtain thorough mixing. While the co-additive is usually the last component added at the wet-end of the process, it may be added at any time. Optional wet-end additives can be added at a suitable time.

Other optional constituents of the composite-forming composition at the wet-end in the present process include pigments, fillers, curing agents, waxes, oils and other common additives well known in the paper-making art.

A composite is formed by flowing the resulting suspension over a porous support such as a screen to form a wet mat, dewatering the wet mat and completing drying by heating. The dewatering step includes draining and may include wet pressing. Pressing and heating may be carried out simultaneously to form a composite. Alternatively, ambient temperature pressing followed by heating to complete drying may be employed. Optionally, other compacting, shaping, tempering and curing steps may be included. The temperatures used for hot pressing, curing and tempering or other heating steps often are from 100°C to 250°C, although higher or lower temperatures are operable.

For making many of the composites, paper machines such as a Fourdriner machine, a cylinder machine or a laboratory sheet-forming apparatus are useful.

The product of the process of this invention has improved internal bond strength compared to prior art methods. Within the range of permissible variables in carrying out the invention at low levels of latex, the properties are more sensitive to degree of bonding of polymer particles to fiber than to properties of the polymer composition. At high levels of latex, if sufficient heat is applied to fuse the latex particles, the properties of the resulting product depend markedly on the properties of the polymer phase.

The process of the invention also is advantageous compared to prior art processes in that there is better retention; i.e., more of the suspended solids are removed from the aqueous suspension. During carrying out of the process, the shear stability of the system allows mechanical working without redispersion of solids. Hence, the effluent from the process is lower in solids which allows the use of a higher level of recycle and minimizes discharge of pollutants to the environment.

The "formation" of a sheet of paper refers to the uniformity of distribution of fibers in the sheet. Poor formation occurs when the fibers flocculate or clump together causing alternating heavy and light spots in the sheet. Besides diminishing the aesthetic appeal of the paper, poor formation tends to decrease in-plane strength properties such as tensile strength. Poor formation causes uneven surfaces which contribute to poor printability.

In this specification and claims, all references to degree of polymerization (DP) are weight average unless otherwise indicated.

The following examples illustrate ways in which the present invention may be carried out, but should not be construed as limiting the invention. All parts and percentages are by weight unless otherwise expressly indicated.

Many of the latexes used in the examples are indentified in Table I. The monomers shown for the base latex were polymerized under emulsion polymerization conditions using dodecylbenzyldimethylsulfonium chloride as emulsifier in amounts varying from 1.8 to 2.5 percent, 0.2 percent of dodecanethiol as chain transfer agent and 0.5 percent of $\alpha,\alpha'$-azobisisobutyronitrile as catalyst, the percentages being based on the total weight of monomers. The base latex particles were then capped (encapsulated) by adding the cap monomers of the kind and in the amount shown in Table I in a continuous manner over a period of about one hour for each 100 grams of the total monomeric components. Additional catalyst of the same kind, stirring and elevated temperature, usually 70°C, were used for the capping reaction. The resulting latex products were then reacted at a temperature of 70°C with an excess of a nucleophile which was 2-(dimethylamino)ethanol (for the quaternary ammonium bound charge) and the excess nucleophile was removed by steam distillation after the desired amount of bound charge was reached. For the sulfonium bound charge, the nucleophile was dimethyl sulfide, the reaction temperature was 50°C and excess nucleophile was removed by vacuum distillation. The structured particle latexes thus produced had the properties shown in Table I.

TABLE I[a]

| | Base Latex | | | | | Cap | | | | Structured Particle Latex | | | | |
|---|---|---|---|---|---|---|---|---|---|---|---|---|---|---|
| | | | | | | | | | | | Bound Charge | | Particle[b] Size | Solids[c] |
| Latex | St % | Bd % | VBC % | VCN % | Tg[d] °C | St % | Bd % | VBC % | Cap % | VBC % | Kind | Meq/g | Angstroms | % |
| A | 65 | 35 | | | 2 | 15 | 35 | 50 | 20 | 10 | N+ | 0.365 | 1290 | 31.5 |
| B | 65 | 35 | | | 2 | 15 | 35 | 50 | 20 | 10 | N+ | 0.300 | 1760 S | 40 |
| C | 65 | 35 | | | 2 | 15 | 35 | 50 | 30 | 15 | N+ | 0.223 | 1250 | 27.5 |
| D | 65 | 35 | | | 2 | 15 | 35 | 50 | 30 | 15 | N+ | 0.294 | 1250 | 29.2 |
| E | 65 | 35 | | | 2 | 15 | 35 | 50 | 30 | 15 | N+ | 0.415 | 1250 | 29.4 |
| F | 55 | 45 | | | −15 | | 50 | 50 | 13 | 6.5 | S+ | 0.176 | 1190 | 27.0 |
| G | 60 | 40 | | | − 8 | | 50 | 50 | 13 | 6.5 | S+ | 0.173 | 1335 | 23.9 |
| H | 65 | 35 | | | 2 | | 50 | 50 | 13 | 6.5 | S+ | 0.199 | 1360 | 23.2 |
| I | 70 | 30 | | | 20 | | 50 | 50 | 13 | 6.5 | S+ | 0.193 | 1320 S | 30 |
| J | 65 | 35 | | | 2 | 15 | 35 | 50 | 20 | 10 | N+ | 0.359 | 1080 | 30.6 |
| K | 80 | 20 | | | 35 | 15 | 35 | 50 | 20 | 10 | N+ | 0.415 | 1400 | 33.1 |
| L | 90 | 10 | | | 61 | 15 | 35 | 50 | 20 | 10 | N+ | 0.452 | 1490 | 27.0 |
| M | 70 | 10 | — | 20 | 80x | 15 | 35 | 50 | 20 | 10 | N+ | 0.474 | 1490 | 32.5 |
| N | 65 | 35 | | | 2 | 13.2 | 29.4 | 57.3 | 20 | 11.5 | N+ | 0.407 | 1180 | 23.2 |
| X | 55 | 35 | 10 | | 5x | 55 | 35 | 10 | 20 | 10 | N+ | 0.400 | 1640 S | 40 |

a St = Styrene; VBC = Vinylbenzyl Chloride; N+ = Quaternary Ammonium; Bd = Butadiene; VCN = Acrylonitrile; S+ = Sulfonium.

b Average diameter determined by electron microscopy except (S) which were determined by light scattering measurements.

c After steam stripping.

d Derived from Encyclopedia of Polymer Science and Technology, John Wiley & Sons, N.Y., 1970, Vol. 13, page 322, Figure 8.

x Estimated value.

Tests referred to in the examples were carried out as follows:

*Tensile:*

Tensile values are recorded as breaking length, in meters, and are determined according to TAPPI Standard T 494—os—70 except the values are the average of 3 samples rather than 10 and the jaw gap is 5.08 cm rather than 20.32 cm.

*Canadian Standard Freeness (CSF):*

The values are determined according to TAPPI Standard T 227—M—58 except where variations in the procedure are indicated.

*Formation*

A common way to measure formation is to compare visually the sheet to be measured with a set of ten standard sheets specifically made with decreasing levels of uniformity of fiber distribution (formation) and ranked from 1 to 10 with 1 being the best and 10 the worst. Alternatively, optical instruments, which are available commercially can be used for measuring formation.

*Delamination Resistance:*

The internal bond strength of the products is measured by the delamination resistance test. In this test, a strip one inch in width of the product to be tested is placed between two strips of adhesive tape having sufficient adhesiveness that failure will occur in the paper when the two pieces of tape are pulled apart. Delamination is started by hand, then continued and measured by an Instron Tensile Tester using a jaw separation rate of 30.48 cm per minute. The average force resisting delamination over a length of about 10.16 cm is determined for each of two samples. The average of the two samples is recorded in ounces per inch of width, abbreviated oz/in. Those values are followed in parenthesis by conversion to metric units, i.e., grams per 2.54 centimeters (g/2.54 cm). When a different testing tape is used, the new tape is calibrated according to the initial tape and values are reported in values according to the initial tape.

Example 1

A steam-heated, mechanically-defibered pulp having a Canadian Standard Freeness (CSF) of 785 milliliters and a solids content of 24% was diluted to 1% solids with water having a hardness of 10.6 (as $CaCo_3$, ppm) and an alkalinity of 48 (as $CaCo_3$, ppm). The components shown in Table II were added to the resulting fiber suspension in the order shown and stirring was continued for the time indicated before the next step. About 3% of Latex A would be required to reach the charge reversal point of the pulp.

TABLE II

| Step | Component | Amount % (A) | Stirring Time Min. |
|---|---|---|---|
| 1 | Latex A | 5 | 1.5 |
| 2 | Co-additive (b) | 0.8 | 0.5 |
| 3 | Alum | 2 | 2.0 |

(a) = Dry basis, calculated on the dry weight of fiber.

(b) = Hydrolyzed polyacrylamide as described below

The co-additive is a hydrolyzed polyacrylamide having a degree of polymerization of 25,000 and an available charge of 1.94 milliequivalents per gram of co-additive (meq/g).

A sheet was formed on filter paper (12.5 cm in diameter) by filtering the resulting suspension through a Büchner funnel with vacuum from a water aspirator. The resulting wet sheet was removed from the funnel, placed between two clean filter papers and 4 blotters and pressed on a Williams press at 1715 psig (120 kg/sq cm). After the blotters and filter papers were removed, the resulting damp sheet was dried on a hot plate at 165°C for 5 minutes. The dried sheet was conditioned by being kept in a room maintained at 50% humidity and 23°C for at least 2 hours, generally overnight, before testing.

The effluent from the filtration was analyzed for turbidity with a spectrophotometer as a measurement of the white water clarity. The wavelength of light used was 425 nm and a cuvette diameter of 19 mm. Tensile values for the composite, drainage time, and clarity (percent transmission) of the effluent from the filtration are shown in Table III.

Comparative Example 1C

A sheet was prepared in the same manner and with the same components except the latex and the co-additive were omitted. The drainage time, clarity and tensile results are shown in Table III.

TABLE III

| Example No. | Drainage Time Min. | Clarity % | Tensile a |
|---|---|---|---|
| 1 | 1.2 | 94 | 762 |
| *1C | 8.0 | 60 | 127 |

* = Not an example of the invention
a = Breaking length, meters

Example 1 illustrates the improvement in drainage time and clarity of the effluent (waste water) from the process and improvement in strength of the product provided by the invention.

Examples 2—10

For each example, an aqueous dispersion containing 1393 parts of water having a hardness of 106 ppm (calculated as calcium carbonate) and an alkalinity of 48 ppm (calculated as calcium carbonate) and 7 parts (dry basis) of unbleached Canadian softwood kraft having a Canadian Standard Freeness (CFS) of 400 ml was stirred at such a rate that the kraft was just turning over gently. To the moving kraft suspension was added 1.4 parts (dry weight basis) of Latex A. After stirring at the same rate for an additional two minutes, a dilute aqueous solution (0.2% solids) of the specified co-additive was added in the amount shown and stirring was continued for an additional 30 seconds. The resulting furnish (pH 7—8) was made into a handsheet 30.48 x 30.48 cm on an M/K systems "Mini-Mill" handsheet machine using water for dilution of the description given above. The handsheet was pressed to a solids content of from 37 to 38% by placing the sheet and couching blotter between two pieces of wool felt and running the resulting sandwich through the press at medium speed using a press pressure of 80 psig (5.6 kg/sq cm). The pressed sheet was removed from the wool felts, and stripped from the couching blotter, then dried in a drier maintained at 220°F (104°C). The product was just cockle free, and contained about 95 percent solids.

The co-additive used in the examples is a hydrolyzed polyacrylamide having 1.94 milliequivalent of available charge (carboxyl) per gram and a degree of polymerization of 25000. Data are shown in Table IV.

Comparative Examples 2C1—2C5, 5C and 8C

Comparative Examples 2C2 and 2C4 were prepared in the same manner from the same components as described for Examples 2—10. The amounts of the latex were below that required (5.5%) to cause charge reversal on the fiber used.

Comparative Examples 2C1, 2C3, 2C5, 5C and 8C were prepared in the same manner except no co-additive was included. Data for the comparative examples are included in Table IV.

TABLE IV

| Example | Latex % (a) | Co-additive % (b) | Delamination Resistance oz/in | (g/2.54 cm) |
|---|---|---|---|---|
| *2C1 | 2 | — | 9 | (260) |
| *2C2 | 2 | 0.25 | 9.5 | (270) |
| *2C3 | 5 | — | 12 | (340) |
| *2C4 | 5 | 0.25 | 12.5 | (354) |
| *2C5 | 10 | — | 16 | (450) |
| 2 | 10 | 0.25 | 18 | (510) |
| 3 | 10 | 0.5 | 18.3 | (519) |
| 4 | 10 | 1. | 19 | (540) |
| * 5C | 15 | — | 18.5 | (524) |
| 5 | 15 | 0.25 | 20.8 | (590) |

TABLE IV cont'd

| Example | Latex % (a) | Co-additive % (b) | Delamination Resistance oz/in | (g/2.54 cm) |
|---|---|---|---|---|
| 6 | 15 | 0.5 | 25 | (710) |
| 7 | 15 | 1. | 27.6 | (782) |
| * 8C | 20 | — | 20.5 | (581) |
| 8 | 20 | 0.25 | 23.3 | (661) |
| 9 | 20 | 0.5 | 28.7 | (814) |
| 10 | 20 | 1. | 32.6 | (924) |

* Not an example of the invention.
(a) = Calculated on fiber, dry basis.
(b) = Calculated on latex + fiber, dry basis.

Example 11

A sheet was prepared using the materials in the same amounts and by the process described in Examples 2—10 except the latex was Latex B (see Table I), the amount of the same co-additive was 0.6%, dry basis calculated on the weight of the fiber. The sheet was tested for delamination resistance (see Table V).

Comparative Example 11C

A sheet was prepared in the same manner with the same materials in the same amounts as in Example 11 except Latex X was used instead of Latex B. Latex B and Latex X have the same average polymer composition but Latex B is a structured particle latex whereas Latex X has rather uniform composition throughout the particle as described above. For comparison with Example 11, data are shown in Table V.

TABLE V

| Example No. | Bound Charge Location | meq/g | Delamination Resistance oz/in | (g/2.54 cm) |
|---|---|---|---|---|
| 11 | Cap | 0.300 | 21.6 | (612) |
| *11C | Through Particle | 0.400 | 14.6 | (414) |

* Not an example of the invention.

From these delamination resistance values shown in Table V, it is seen that Example 11 (an example of the invention) provides considerable improvement over a process using a latex having the bound charges throughout the particle rather than only near the particle surface even though the total charge was greater for Comparative Example 11C.

Examples 12—14

Sheets were prepared in the same manner as described in Example 11 except that for Latex B there were substituted Latex C, Latex D and Latex E, respectively. The latter three latexes differ from each other in the amount of nucleophile (dimethylaminoethanol) reacted with the capped latex and thus differ in the amount of bound charge. Data are shown in Table VI.

TABLE VI

| Example No. | Latex | Bound Charge meq/g | Delamination Resistance oz/in | (g/2.54 cm) |
|---|---|---|---|---|
| 12 | C | 0.223 | 18.9 | (536) |
| 13 | D | 0.294 | 21.8 | (618) |
| 14 | E | 0.415 | 25.0 | (709) |

Examples 12—14 show that the internal bond strength of the product increases as the bound charge on the latex increases.

Examples 15—22

Sheets were prepared as described in Example 11 except that different latexes were used but in the same proportions. The major differences among the latexes relate to the composition in the base latex from which the structured particle latex was made (see Table I). Data are shown in Table VII.

Comparative Example 22C

A sheet was prepared in the same manner as for Examples 15—22 except the latex and the co-additives were not included. Results are shown in Table VII.

TABLE VII

| Example No. | Latex | Core Tg °C | Delamination Resistance oz/in | (g/2.54 cm) |
|---|---|---|---|---|
| 15 | F | −15 | 23.9 | (678) |
| 16 | G | − 8 | 23.8 | (675) |
| 17 | H | 2 | 24.6 | (697) |
| 18 | I | 20 | 25.5 | (723) |
| 19 | J | 2 | 22.6 | (641) |
| 20 | K | 35 | 19.7 | (558) |
| 21 | L | 61 | 17.8 | (505) |
| 22 | M | 80 | 14.6 | (414) |
| *22C | — | — | 5.8 | (164) |

*Not an example of the invention.

Examples 15—18 illustrate the process of the invention where the sulfonium group provides the bound charge rather than the quaternary ammonium group of Examples 1—14 and shows operability of the process over a broad composition of latex polymer (broad range of Tg values) at approximately equal bound charge. Within this series, there is little variation in internal bond strength in the products as shown by the delamination test.

Examples 19—22 illustrate a higher level of bound charge in the latex and variations in the base latex (core composition) to provide increasing Tg values. Within the series, as the polymers become harder (higher Tg values), the measured delamination resistance of the product sheets decreased under the conditions of these experiments. However, when the heating time was increased to 12 minutes rather than one minute, the delamination resistance was 22.4 oz/in (635 g/2.54 cm); 18.5 oz/in (524 g/2.54 cm) and 14.8 oz/in (420 g/2.54 cm), for Examples 20, 21 and 22, respectively. These examples support the position that at the higher Tg values in the disclosed range for the latex used, higher temperatures and/or longer times should be selected or conversely at a given time/temperature condition in the process a latex with sufficiently low Tg value should be used.

Examples 23—28

Sheets were prepared as described in Example 11 except a different latex was used in all these

examples and the identity of the co-additive was changed but not the amount in all these examples except No. 25. Data are shown in Table VIII.

TABLE VIII

| Example No. | Latex | Co-Additive Kind | Available Charge meq/g | DP (f) | Delamination Resistance oz/in | (g/2.54 cm) |
|---|---|---|---|---|---|---|
| 23 | A | SPSS (a) | 5.3 | 17000 | 24.6 | (697) |
| 24 | A | EVMA (b)_ | 2.55 | i | 25.2 | (714) |
| 25 | N | AAm/COO_ (C) | 1.94 | 25000 | 21.5 | (610) |
| 26 | N | AAm/COO_ (d) | 1.39 | 28000 | 24.4 | (692) |
| 27 | N | AAm/COO (e) | 2.78 | 28000 | 22.0 | (624) |
| 28 | N | AAm/AMPS (e) | 1.05 | 30000 | 20.0 | (567) |

(a) Sodium polystyrene sulfonate
(b) Copolymer of 50% of ethyl acrylate, 30% of vinyl acetate, 10% of methacrylic acid, 10% of acrylic acid which is solubilized in alkali, then the pH is adjusted to 7.
(c) Partially hydrolyzed polyacrylamide
(d) A copolymer of acrylamide and acrylic acid
(e) A copolymer of acrylamide and 2-acrylamido-2-methylpropane sulfonic acid
(f) Degree of polymerization
(i) Indeterminate because of crosslinking

Example 29

An aqueous dispersion containing 1990 parts of water having a hardness of 106 ppm (calculated as calcium carbonate) and an alkalinity of 48 ppm (calculated as calcium carbonate) and 10 parts (dry basis) on unbleached Canadian softwood kraft having a Canadian Standard Freeness (CSF) of 400 ml was stirred at such a rate that the kraft was just turning over gently. To the moving kraft suspension was added 90 parts (dry weight basis) of Latex I. After stirring at the same rate for an additional two minutes, 3.3 parts of the specified co-additive as a dilute aqueous solution (0.2% solids) was added and stirring was continued for an additional 30 seconds. The resulting furnish was made into a handsheet (30.48 x 30.48 cm) on a M/K Systems "Mini-Mill" handsheet machine using water for dilution of the description given above. The resulting wet sheet was placed between two pieces of clean filter paper and 4 blotters and pressed on a Williams press at 136 psig (9.52 kg/sq cm). After the blotters and filter papers were removed, the resulting damp sheet was dried on a hot plate at 165°C for 5 minutes.

The resulting dry sheet was so strong that the delamination resistance could not be determined by the method disclosed in this specification.

The co-additive used in the example was a hydrolyzed polyacrylamide having 1.94 milliequivalents of anionic group (carboxyl) per gram and a degree of polymerization of 5500.

Example 30

A sheet was prepared using the same materials in the same amounts and by the process described in Examples 2—10 except the amount of the same co-additive was 0.1% and the latex was a latex prepared according to United States Patent No. 3,873,488 in a batch process from 65 parts of styrene, 30 parts of butadiene, 5 parts of acrylonitrile and 4 parts of vinylbenzylmethyldodecylsulfonium chloride with no added nonpolymerizable surface active material. The latex had a solids content of 23.9%, a particle size of 1090 angstroms (determined by light scattering) and 0.072 milliequivalent of bound charge per gram of polymer. The estimated Tg was 25°C. The delamination resistance of the sheet was 19.3 oz/in (547 g/2.54 cm).

This example illustrates the practice of the invention using a latex having a level of bound charge near the minimum suitable for this invention and also illustrates the use of a latex which is not prepared according to the method for making structured particle latexes.

Examples 31 and 32

Sheets were prepared using the same material in the same amounts and by the process described for Examples 2—10 except the latex was as described below, a different co-additive was used in the

amount shown in Table IX and deionized water was substituted for the water.

The latex as described, at 23% solids and having a particle size of 880 angstroms, was a structured particle latex having 100 parts of a core copolymer of 40% of styrene, and 60% of butyl acrylate (core Tg = −10°C) capped by 10 parts of a copolymer of 33% of vinylbenzyl chloride and 67% of butyl acrylate which was subsequently reacted with trimethylamine to provide 0.121 milliequivalent of bound charge per gram of latex, solids basis.

The co-additive used in these examples was a hydrolyzed polyacrylamide having a degree of polymerization of 20,800 and an available charge of 3.48 milliequivalent (from carboxyl groups) per gram. Data are shown in Table IX.

Comparative Examples 31C1 and 31C2

Sheets were prepared in the same manner as for Examples 31 and 32 except that both the latex and the co-additive were omitted in 31C1 and the co-additive was omitted in 31C2. Data are included in Table IX.

TABLE IX

| Example No. | Latex % a | Co-Additive % a | Delamination Resistance oz/in | (g/2.54 cm) |
|---|---|---|---|---|
| *31C1 | 0 | 0 | 5.8 | (164) |
| *31C2 | 20 | 0 | 9.0 | (250) |
| 31 | 20 | 0.1 | 13.1 | (371) |
| 32 | 20 | 0.25 | 19.1 | (541) |

* Not an example of the invention
a = Solids basis, calculated on the fiber.

Examples 31 and 32 illustrate the invention using a softer water, i.e., deionized water, a different co-additive and a latex having different composition than in the other examples of the invention.

Examples 33 and 34

An aqueous dispersion containing 1393 parts of water having a hardness of 106 ppm (calculated as calcium carbonate) and an alkalinity of 48 ppm (calculated as calcium carbonate) and 7 parts (dry basis) of unbleached Canadian softwood kraft having a Canadian Standard Freeness (CFS) of 400 ml. was stirred at such a rate that the kraft was just turning over gently. To the moving kraft suspension was added 1.4 parts (dry weight basis) of a latex of the kind described below. After stirring at the same rate for an additional two minutes, a dilute aqueous solution (0.2% solids) of the specified co-additive was added in the amount shown in Table X and stirring was continued for an additional 30 seconds. The resulting furnish was made into a handsheet (30.48 x 30.48 cm) on an M/K Systems "Mini-Mill" handsheet machine using water for dilution of the description given above. The handsheet was pressed to a solids content of from 37 to 38% by placing the sheet and couching blotter between two pieces of wool felt and running the resulting sandwich through the press at medium speed using a press pressure of 80 psig (5.6 kg/sq cm). The pressed sheet was removed from the wool felts, and stripped from the couching blotter, then dried in a drier maintained at 220°F (104°C). The product was just cockle free, and contained about 95 percent solids.

The latex used in the foregoing experiment was a structured-particle latex having 80 percent of (a) a core copolymer of 35 percent of butadiene, 65 percent of styrene and 20 percent of (b) an encapsulating layer of 35 percent of butadiene, 15 percent of styrene and 50 percent of vinylbenzyl chloride which was reacted subsequent to polymerization with 2/(dimethylamino) ethanol to provide a bound quaternary ammonium charge of 0.365 milliequivalent per gram of polymer in the latex.

The co-additive (A) used in the example is a hydrolyzed polyacrylamide having 1.94 milliequivalent of available charge per gram and a degree of polymerization of 5500.

For comparison with the above example of the invention, a sheet was prepared in the same manner except for co-additive (A) there was substituted co-additive (B), a hydrolyzed polyacrylamide having the same available charge but having a degree of polymerization of 25,000, i.e., outside the range required for this invention. A further comparison (33B) was made in the same manner and with the same components except the co-additive was omitted. Data are shown in Table X below.

TABLE X

| Example No. | Co-Additive Kind | DP[a] | Charge meq/g | Amount % (b) | CSF[c] ml | Available Transmission [d] % | Formation Rating | Delamination oz/in | Resistance (g/2.54 cm) |
|---|---|---|---|---|---|---|---|---|---|
| 33 | A | 5500 | 1.94 | 0.6 | 505 | 76 | 2 | 22.7 | (644) |
| 34 | A | 5500 | 1.94 | 1.2 | 550 | 87 | 2 | 24.1 | (683) |
| *33A | B | 25000 | 1.94 | 0.6 | 673 | 73 | 7 | 25.6 | (726) |
| *33B | None | | | — | 415 | 23 | 1 | 20.9 | (593) |
| *34B | B | 25000 | 1.94 | 1.2 | 723 | 97 | 10 | 32.5 | (921) |

* Not an example of the invention
(a) Degree of polymerization.
(b) Based on weight of kraft.
(c) At 3.6 g total solids, uncorrected for temperature.
(d) 425 Millimicrons, 19 mm cell vs deionized water.

The turbidity measurements are made on the effluent from the freeness (CSF) test and are indicative of the "white water" characteristics which are obtained in the paper making process.

The sheets from Examples 33 and 34 were acceptable in all the properties measured. Comparative examples 33A and 34B were deficient in formation and therefore are unacceptable. While comparative example 33B indicated good formation, the transmission was low indicating poor flocculation onto the fibers and additionally the delamination resistance was low.

Examples 33—38

Sheets were prepared as described in Examples 33 and 34 except different latexes and a different co-additive in two different amounts were used as shown in Table XI. The latexes used (Latex P and Latex Q) were structured particle latexes containing 70% of a core copolymer consisting of 65% of styrene and 35% of butadiene modified with 0.2% of dodecanethiol and the core was encapsulated (capped) with 30% of a copolymer of 50% of vinylbenzylchloride, 35% of butadiene and 15% of styrene which was subsequently reacted with an excess of dimethysulfide. The latter reaction was stopped for Latex P by vacuum distilling the excess dimethyl sulfide when the bound charge of sulfonium group was 0.195 milliequivalent per gram and for Latex Q when the bound charge was 0.388 milliequivalent per gram.

The co-additive was a hydrolyzed polyacrylamide having an available charge of 3.3 milliequivalents per gram as carboxyl groups and having a degree of polymerization of 4100. Data are shown in Table XI.

Comparative Examples 35C and 37C

Sheets were prepared as described for Examples 35 and 37 except no co-additive was used. Data are included in Table XI.

TABLE XI

| Example No. | LATEX Kind | Bound Charge meq/g | CO-ADDITIVE Amount % (a) | Formation Rating | CSF ml | Transmission % | Delamination oz/in | Resistance (g/2.54 cm) |
|---|---|---|---|---|---|---|---|---|
| 35 | P | 0.195 | 0.3 | 2 | 520 | 74 | 26.4 | (748) |
| *35C | P | 0.195 | none | 1 | 390 | 16 | 23.2 | (658) |
| 36 | P | 0.195 | 0.6 | 2 | 580 | 69 | 26.5 | (751) |
| 37 | Q | 0.388 | 0.3 | 2 | 500 | 31 | 23.5 | (666) |
| *37C | Q | 0.388 | none | 1 | 420 | 10 | 21.5 | (610) |
| 38 | Q | 0.388 | 0.6 | 2 | 580 | 87 | 27.2 | (771) |

footnotes to TABLE XI.

* Not an example of the invention.

(a) Based on dry weight of fiber.

Examples 35—38 illustrate the practice of this invention using a different kind of cationic bound charge than in Examples 33 and 34 and also illustrate the use of widely differing amounts of bound charge.

**Claims**

1. A method for preparing high strength composites by mixing an aqueous slurry of negatively charged, water-insoluble natural or synthetic fibers with a mixture of cationic and anionic polymers, removing water from the aqueous suspension to form a wet mat; and drying the mat by heating; characterized in that said mixture of polymers is a cationic latex containing cationic water-insoluble copolymer and a co-additive, said copolymer being present at particles having pH independent bound charges at or near the particle surface in an amount of 0,07 to 0,6 milliequivalent per gram of copolymer, the copolymer particles of the latex being deformable at the temperature of the process and the co-additive is a water-soluble anionic polymer having a degree of polymerization above 3000, having an available charge of from 0,3 to 8 milliequivalents per gram of polymer, having an acyclic carbon-carbon chain backbone and having the capability of retaining its solubility in the presence of polyvalent metal ions at a pH from 4 to 7 to form an aqueous suspension of components.

2. The method of claim 1 characterized in that the cationic polymer particles are structured particles consisting of a non-ionic organic polymer core encapsulated by a thin polymer layer having bound charges of pH independent cationic groups at or near the particle surface.

3. The method of claim 1 characterized in that the amount of latex, solids basis, is from 0.5 to 2000 percent based on the weight of the fiber.

4. The method of claim 1 characterized in that the amount of bound charges in the latex is greater than 0,1 milliequivalent per gram.

5. The method of claim 1 characterized in that the coadditive is an acrylamide polymer.

6. The method of claim 5 characterized in that the anionic charge of the co-additive is provided by a carboxyl group.

7. The method of claim 1 characterized in that the co-additive is used in an amount of from 0,05 to 160 per cent by weight, based on the dry weight of the fiber.

8. A fibrous web comprising a dried composite containing a paper-making grade of fiber having an anionic charge, characterized in that it contains from 5 to 2000 percent, solids basis calculated on the weight of the fiber, of a structured-particle latex having a non-ionic copolymer core; the non-ionic core being encapsulated by a thin layer of a water-insoluble organic copolymer having bound charges of pH independent cationic groups; the latex having from 0,15 to 0,6 milliequivalent of bound charge per gram of polymer in the latex and from 0,15 to 160 percent, based on the weight of the fiber, of a co-additive which is a water-soluble anionic polymer of an acrylamide having a degree of polymerization of from 3000 to 10.000 and having an available charge of from 0,3 to 8 milliequivalents per gram of co-additive wherein the co-additive retains its water solubility in the presence of polyvalent metal ions at a pH from 4 to 7; all percentages being by weight.

9. Web of claim 8, characterized in that the core comprises a copolymer of from 20 to 50 percent of an aliphatic, conjugated diene, from 20 to 80 per cent of a monovinylidene aromatic compound, from 0 to 5 percent of polar, non-ionic ethylenically unsaturated monomers and from 0 to 25 percent of other ethylenically unsatured, nonionic monomers which when in the form of homopolymers are water-insoluble.

10. The fibrous web of claims 8 or 9 characterized in that the amount of available charge of the co-additive is from 0,15 to 0,5 milliequivalent per gram and the degree of polymerization of the co-additive is from 5000 to 10.000.

**Revendications**

1. Procédé pour la préparation de composites très résistants en mélangeant une suspension aqueuse de fibres naturelles ou synthétiques insolubles dans l'eau, chargées négativement, avec un mélange de polymères cationiques et anioniques; en éliminant l'eau de la suspension aqueuse pour former une couche humide; et en séchant la couche par chauffage; caractérisé par la fait que ledit mélange de polymères est un latex cationique contenant un copolymère cationique insoluble dans l'eau et un co-additif, ledit copolymère étant présent sous forme de particules comportant des charges liées indépendantes du pH à, ou au voisinage de, la surface des particules, en une quantité de l'ordre de 0,07 à 0,6 milliéquivalent par gramme de copolymère, les particules de copolymère du latex étant déformables à la température du procédé, et que le co-additif est un polymère anionique soluble dans

l'eau ayant un degré de polymérisation supérieur à 3000, comportant une charge disponible de 0,3 à 8 milliéquivalents par gramme de polymère, ayant un squelette à chaîne carbone-carbone acylique et ayant la capacité de conserver sa solubilité en présence d'ions métalliques polyvalents à un pH de 4 à 7 pour former une suspension aqueuse de composants.

2. Procédé selon la revendication 1, caractérisé par le fait que les particules du polymère cationique sont des particules structurées constituées par un noyau en polymère organique non-ionique, enrobées par une couche mince de polymère comportant des charges liées de groupes cationiques indépendants du pH à la surface des particules ou au voisinage de cette surface.

3. Procédé selon la revendication 1, caractérisé par le fait que la quantité de latex, calculée en matières solides, est de l'ordre de 0,5 à 2000 pourcents rapportés au poids de la fibre.

4. Procédé selon la revendication 1, caractérisé par le fait que la quantité de charges liées dans le latex est supérieure à 0,1 milliéquivalent par gramme.

5. Procédé selon la revendication 1, caractérisé par le fait que le co-additif est un polymère d'acrylamide.

6. Procédé selon la revendication 5, caractérisé par le fait que la charge anionique du co-additif est obtenue par un groupe carboxyle.

7. Procédé selon la revendication 1, caractérisé par le fait que le co-additif est utilisé en une quantité de l'ordre de 0,05 à 160% en poids rapportés au poids sec de la fibre.

8. Tissu fibreux comprenant un composite séché renfermant un type de fibre servant à fabriquer le papier comportant une charge anionique, caractérisé par le fait qu'il contient de 5 à 2000 pourcent, calculés en matières solides sur le poids de la fibre, d'un latex à particules structurées ayant un noyau en copolymère non-ionique; le noyau non-ionique étant enrobé par une couche mince d'un copolymère organique insoluble dans l'eau comportant des charges liées de groupes cationiques indépendants du pH; le latex ayant de 0,15 à 0,6 milliéquivalent de charge liée par gramme de polymère dans le latex et de 0,15 à 160 pourcent, calculés sur le poids de la fibre, d'un co-additif qui est un polymère anionique soluble dans l'eau d'un acrylamide ayant un degré de polymérisation de 3000 à 10 000 et ayant une charge disponible de 0,3 à 8 milliéquivalents par gramme de co-additif où le co-additif conserve sa solubilité dans l'eau en présence d'ions métalliques polyvalents à un pH de 4 à 7; tous les pourcentages étant exprimés en poids.

9. Tissu selon la revendication 8, caractérisé par le fait que le noyau comprend un copolymère de 20 à 50% d'un diène aliphatique conjugué, de 20 à 80% d'un composé monovinylidène aromatique, de 0 à 5% de manomères éthyléniquement insaturés, non-ioniques, polaires, et de 0 à 25% d'autres monomères non-ioniques, éthyléniquement insaturés qui, lorsqu'ils sont sous la forme d'homopolymères, sont insolubles dans l'eau.

10. Tissu fibreux selon les revendications 8 ou 9, caractérisé par le fait que la quantité de charge disponible du co-additif est de l'ordre de 0,15 à 0,5 milliéquivalent par gramme et que le degré de polymérisation du co-additif est de 5000 à 10 000.

**Patentansprüche**

1. Verfahren zur Herstellung von hochfesten Verbundstoffen durch Mischen einer wässrigen Aufschlämmung von negativ geladenen wasserunlöslichen natürlichen oder synthetischen Fasern mit einem Gemisch aus kationischen und anionischen Polymeren, Entfernen des Wassers aus der wässrigen Suspension zur Bildung einer feuchten Matte, und Trocknen der Matte durch Erwärmen, dadurch gekennzeichnet, dass es sich bei dem Polymerengemisch um einen kationischen Latex handelt, der ein kationisches wasserunlösliches Copolymer sowie ein Coadditiv enthält, wobei dieses Copolymer in der Form von Partikeln mit pH-unabhängigen gebundenen Ladungen an oder nahebei der Partikeloberfläche und einer Menge von 0,07 bis 0,6 Milliäquivalent je Gramm Polymer vorliegt, wobei die Copolymerpartikel des Latex bei der Prozesstemperatur verformbar sind und das Coadditiv ein wasserlösliches anionisches Polymer mit einem Polymerisationsgrad von über 3000 ist, und eine freie Ladung von 0,3 bis 8 Milliäquivalent je Gramm Polymer hat, mit einem Gerüst aus einer azyklischen Kohlenstoff-Kohlenstoff-Kette und mit der Fähigkeit, seine Löslichkeit in Anwesenheit von polyvalenten Metallionen bei einem pH von 4 bis 7 beizubehalten um eine wässrige Suspension der Bestandteile zu bilden.

2. Verfahren nach Anspruch 1, dadurch gekennzeichnet, dass es sich bei den kationischen Polymerpartikeln um strukturierte Partikel handelt, die aus einem nichtionischen organischen Polymerkern bestehen, der in einer dünnen Polymerschicht mit gebundenen Ladungen von pH-unabhängigen kationischen Gruppen an oder nahebei der Partikeloberfläche eingekapselt ist.

3. Verfahren nach Anspruch 1, dadurch gekennzeichnet, dass die Menge des Latex als Trockensubstanz 0,5 bis 2000 Prozent auf der Grundlage des Fasergewichts beträgt.

4. Verfahren nach Anspruch 1, dadurch gekennzeichnet, dass die Menge der gebundenen Ladungen im Latex grösser als 0,1 Milliäquivalent je Gramm ist.

5. Verfahren nach Anspruch 1, dadurch gekennzeichnet, dass es sich bei dem Coadditiv um ein Acrylamid-Polymer handelt.

6. Verfahren nach Anspruch 5, dadurch gekennzeichnet, dass die anionische Ladung des Coadditivs von einer Carboxylgruppe geliefert wird.

7. Verfahren nach Anspruch 1, dadurch gekennzeichnet, dass das Coadditiv in einer Menge von 0,05 bis 160 Gewichtsprozent auf der Grundlage des Trockengewichts der Faser eingesetzt wird.

8. Eine Faserverbundstoffbahn, bestehend aus einem getrockneten Verbundstoff, enthaltend eine papierbildende Faserqualität mit einer anionischen Ladung, dadurch gekennzeichnet, dass sie, berechnet auf der Grundlage des Fasergewichts, 5 bis 2000 Prozent Trockensubstanz eines Latex mit strukturierten Partikeln mit einem nicht-ionischen Copolymerkern enthält, wobei der nichtionische Kern in einer dünnen Schicht aus wasserunlöslichem organischen Copolymer mit gebundenen Ladungen von pH-unabhängigen kationischen Gruppen einge-kapselt ist, und der Latex 0,15 bis 0,6 Milliäquivalent gebundener Ladung je Gramm Polymer im Latex und, auf der Grundlage des Fasergewichts, 0,15 bis 160 Prozent eines Coadditivs enthält, das ein wasserlösliches anionisches Polymer eines Acrylamids mit einem Polymerisationsgrad von 3000 bis 10000 und mit einer freien Ladung von 0,3 bis 8 Milliäquivalent je Gramm Coadditiv ist, indem das Coadditiv seine Wasserlöslichkeit in Anwesenheit von polyvalenten Metallionen bei einem pH von 4 bis 7 beibehält, wobei alle Prozentwerte Gewichtsprozente sind.

9. Bahn nach Anspruch 8, dadurch gekennzeichnet, dass der Kern ein Copolymer von 20 bis 50 Prozent eines aliphatischen konjugierten -dien, von 20 bis 80 Prozent einer aromatischen Monovinylidenverbindung, von 0 bis 5 Prozent eines polaren nichtionischen ethylenisch ungesättigten Monomeren und von 0 bis 25 Prozent sonstige ethylenisch ungesättigte nichtionische Monomere, die in der Form von Homopolymeren wasserunlöslich sind, enthält.

10. Faserbahn 1t. Ansprüchen 8 oder 9, dadurch gekennzeichnet, dass die Menge der freien Ladungen des Coadditivs zwischen 0,15 und 0,5 Milliäquivalent pro Gramm beträgt und der Polymerisationsgrad des Coadditivs zwischen 5000 und 10000 liegt.